(19) Europäisches Patentamt
European Patent Office
Office européen des brevets

(11) EP 0 331 876 B1

(12) EUROPEAN PATENT SPECIFICATION

(45) Date of publication and mention of the grant of the patent:
**03.04.1996 Bulletin 1996/14**

(51) Int Cl.6: **C08J 3/22**, C08L 77/00, D01F 6/60

(21) Application number: **89100503.5**

(22) Date of filing: **12.01.1989**

# (54) Polyamide shaped articles and process for manufacturing the same

Geformte Artikel aus Polyamid und Verfahren zu deren Herstellung

Articles formés de polyamide et procédé pour leur fabrication

(84) Designated Contracting States:
**DE GB IT**

(30) Priority: **07.03.1988 JP 52931/88**
**23.12.1988 JP 327465/88**

(43) Date of publication of application:
**13.09.1989 Bulletin 1989/37**

(73) Proprietor: **KANEBO, LTD.**
**Tokyo 131 (JP)**

(72) Inventors:
- **Onaka, Hidemitsu**
  **Hofu City Yamaguchi Pref. (JP)**
- **Tatsuno, Hitoshi**
  **Nishinomiya City Hyogo Pref. (JP)**
- **Fukazawa, Kazuyuki**
  **Hofu City Yamaguchi Pref. (JP)**
- **Yamabe, Masahiro**
  **Hofu City Yamaguchi Pref. (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

(56) References cited:
**DE-A- 1 965 379**
**FR-A- 2 236 892**
**GB-A- 569 170**
**US-A- 4 639 272**

- **CHEMICAL ABSTRACTS, vol. 103, part 14, 7th October 1985, page 68, abstract no. 106238u, Columbus, Ohio, US; & JP-A- 60 45 689 (TOYO INK. MFG. CO., LTD) 12-03-1985 (Cat. D)**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 331 876 B1

## Description

The present invention relates to polyamide shaped articles, such as fibers, films, sheets or the like, containing dyes, pigments or modifying agents, and a process for manufacturing the same which are excellent in melt-molding performance.

As a process for mass-coloring thermoplastic fiber-forming polymers represented by polyethylene terephthalate and nylon-6, a process wherein pigments or dyes are admixed during polymerization reaction and a color concentrate process wherein pigments or dyes in a high concentration are dispersed in the polymer have heretofore been well-known. However, as for the former, the colorants in practical use are limited to pigments having a good heat resistance, such as titanium dioxide, carbon black or the like, because of high temperatures of the reaction system. In addition, it has drawbacks such that installation of an exclusive autoclave is required because of staining of the autoclave and that lots of expenses and labors are required for cleaning.

As for the latter, in the manufacture of color concentrate, drying of polymers before processing and drying of the color concentrate after processing are required, so that energy consumption is large. Particularly in the case of polyamides, there are disadvantages that properties of melt-spun fibers, such as tensile strength, elongation or the like, are deteriorated or that knots (polymer agglomerates) are formed along the filaments, owing to thermal history experienced in kneading and drying processes.

Alternatively, a dry coloring process wherein pigments or dyes are kneaded directly with a polymer is also known. However, it has difficulties caused by powdery pigments or dyes such that drying is hardly performed, pigments or dyes fly and dispersibility is poor. In any cases, cleaning of spinning lines and drying equipment is required in the case of color changing, so that this process is difficult to adapt to frequent color changings.

The inventors paid their attention to the use of a liquid coloring mixture as a measure for obviating the above drawbacks of the coloring processes. A liquid coloring mixture is usually prepared by kneading a pigment or dye with a liquid vehicle at normal temperature and its constant quantity is fed by a gear pump or plunger pump and compounded with a polymer in a molten state. This liquid coloring mixture has been applied to polyolefins such as polyethylene, polypropylene, ABS resins and polyesters (for example, as described in Japanese Patent Application Laid-open Nos. 60-45,689 and 61-9,453). However, for polyamides, it has been found that only Japanese Patent Application Laid-open No. 59-75,926 and U.S. Patent No. 4,167,503 disclose the use of polyoxyethylene alkyl phenylethers as a vehicle and Japanese Patent Application Laid-open No. 63-92,717 discloses polyamide fibers mass-colored with a liquid colorant comprising an isoindolinone pigment, a metal stearate and a vehicle (preferably, a polyester-ether). As a result of investigation of the above conventional techniques, the inventors have found that polyamide fibers or films manufactured according to those conventional techniques still present problems, such as migration of or staining by dyes and pigments, bleeding of vehicles, opacification of fibers or films, filament breakage due to poor dispersibility or compatibility of dyes and pigments, or the like. Thus, it is the present situation that excellent liquid coloring mixtures for polyamides have not yet been developed and, therefore, mass-colored polyamide fibers, sheets or films are scarecely in commercial production.

DE-A1 965 379 and GB-A-0 569 170 disclose a composition comprising a polyamide, a pigment and a vehicle which is a linear aliphatic polyester derived from a $C_6$-$C_{12}$ diacid and a $C_2$-$C_6$ glycol. US-A-4,639,272 discloses a liquid colorant for ABS resins wherein as a vehicle a liquid polyester having a diethylene glycol component is used.

The object of the present invention is to provide colored polyamide shaped articles which can be easily obtained by melt-molding and which do not have the above-mentioned deficiencies.

The present invention is a polyamide shaped article comprising a polyamide containing at least one substance selected from dyes, pigments and modifying additives, and a vehicle comprising a polymer having a molecular weight of 1,000-60,000, selected from a polyester constituted by a structural component occupying at least 60 % having a recurring unit represented by formula (I):

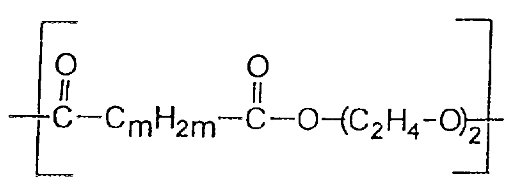

(I)

wherein m is an integer from 2-12, and a polymerization product of a caprolactone with diethylene glycol.

Further, the process for manufacturing the polyamide shaped article according to the present invention is characterized by compounding a polyamide in a molten state with a liquid mixture comprising at least one substance selected from dyes, pigments and modifying additives, and a vehicle comprising a polymer having a molecular weight of 1,000-60,000 selected from a polyester constituted by a structural component occupying at least 60 % having a recurring unit represented by formula (I):

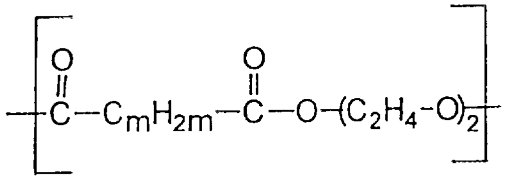

(I)

wherein m is an integer from 2 to 12, and a polymerization product of a caprolactone with diethylene glycol, and then melt-shaping the resulting compound.

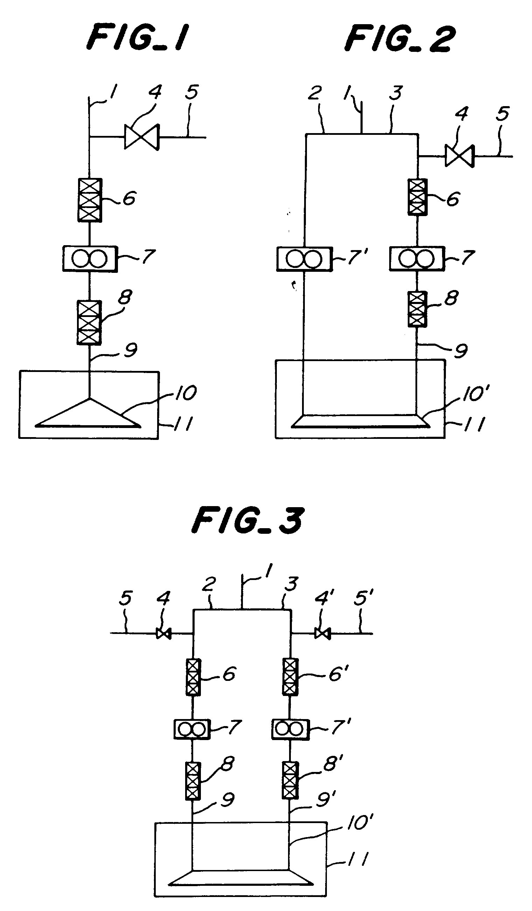

With reference to the accompanying drawing, Figs. 1-3 diagrammatically illustrate embodiments of shaping apparatuses suitably employed in the present invention.

The present invention is applied particularly preferably to dyes, pigments and additives which have a melting point higher than that of a polyamide or have no melting point.

As a dye or pigment, any known dyes or pigments which have been hitherto used may be employable. However, particularly preferable ones for the object of the present invention are inorganic pigments such as various kinds of carbon black, titanium dioxide and calcium carbonate, organic pigments, for example, phthalocyanine pigments such as Phthalocyanine Blue or Phthalocyanine green, perylene pigments such as Perylene Maroon or Perylene Red, dioxazine pigments such as Dioxazine Flavathrone or Dioxazine violet, isoindolinone pigments such as Irgazin Yellow or Irgazin Red, and benzoxazole fluorescent brightener such as 4,4'-bis-(2-benzoxazolyl) stilbene and derivatives thereof. Most of acidic dyes cannot clear hot water color-fastness tests at 60°C and 70°C (JIS L-0845-67) owing to discoloration and staining, so that their use will depend upon application fields of dyed articles.

As an additive to be employed in the present invention, known additives, such as organic carboxylic acids, zeolite particles, flame retardants, reinforcements, antistatic agents, infrared ray radioactive particles, electroconducting particles or the like, can be nonlimitatively employed. However, those additives in powdery form are preferred in the present invention.

As an organic carboxylic acid, examples are stearic acid, fumaric acid, isophthalic acid and terephthalic acid. As an acid anhydride examples are phthalic anhydride, succinic anhydride and benzoic anhydride. However, in any case, those having a good reactivity with the amino group of a polyamide and a boiling point higher than the melting point of the polyamide are preferred. Hard-yellowing or hard-dyeing polyamides can be obtained by incorporating a terminal amino group blocking agent into a polyamide in the spinning head to adjust the amino group content to a desired low level.

For obtaining yellowing resistant polyamides, amino groups are preferred to be present in an amount of 30 gram equivalent or less, more preferably 20 gram equivalent or less, per $10^6$ gram polymer. Alternatively, if it is intended to reduce the content of amino groups to less than 10 gram equivalent per $10^6$ gram polymer, some amount of the added organic carboxylic acids remains as unreacted. The remaining of organic carboxylic acids is not preferred because the acids induce lowering the viscosity (polymerization degree) of the polyamides. Accordingly, an object of the present invention is polyamides having an equivalent weight of amino groups of 10~30 gram equivalent, preferably 10~20 gram equivalent, per $10^6$ gram polymer. Further, the amount to be added and reacted of the organic carboxylic acids is preferred to be in the range defined by the following inequality (II):

$$30 \geqq A - \frac{10^6 X}{M} \geqq 10 \tag{II}$$

where

X: amount of the acids, etc.(g) to be added to 1 gram polyamide,
M: molecular weight of the acids, etc., and
A: equivalent weight of amino groups (gram equivalent per $10^6$ gram polymer) in the polyamide before addition.

The zeolite is generally an aluminosilicate having a three-dimensionally developed skelton structure and, in general, represented by $xM_{2/n}O \cdot Al_2O_3 \cdot ySiO_2 \cdot zH_2O$, based on $Al_2O_3$. Here, M represents an ion-exchangeable metallic ion, usually a mono- or di-valent metal, and n corresponds to the valence. x and y represent coefficients of metal oxides and silica, respectively, and z represents the molar number of the water of crystallization. Solutions of water soluble salts of germicidal metals, for example, silver, copper and zinc, readily exchange ions with zeolite defined in the present invention. Therefore, utilizing such a phenomenon, the above described metallic ions that are needed can be supported alone or in combination on a zeolite fixing phase. However, it has been found that the zeolite particles supporting the metallic ions should satisfy two requirements: one is a specific surface area of 150 $m^2/g$ or more and another is an $SiO_2/Al_2O_3$ mole ratio of 14 or less. If these requirements are not met, the objective articles that achieve an effective germicidal function will not be obtainable.

As a zeolite material having an $SiO_2/Al_2O_3$ mole ratio of 14 or less to be used in the present invention, either of

natural and synthetic zeolites can be employed. Examples of natural zeolite are analcime ($SiO_2/Al_2O_3$=3.6~5.6), chabazite ($SiO_2/Al_2O_3$=3.2~6.0 and 6.4~7.6), clinoptilolite ($SiO_2/Al_2O_3$=8.5~10.5), erionite ($SiO_2/Al_2O_3$=5.8~7.4), faujasite ($SiO_2/Al_2O_3$=4.2~4.6), mordenite ($SiO_2/Al_2O_3$=8.34~10.0) and phillipsite ($SiO_2/Al_2O_3$=2.6~4.4). These typical natural zeolites are suitable for the present invention. Alternatively, as a typical synthetic zeolite, examples are A-type zeolite ($SiO_2/Al_2O_3$=1.4~2.4), X-type zeolite ($SiO_2/Al_2O_3$=2~3), Y-type zeolite ($SiO_2/Al_2O_3$=3~6) and mordenite ($SiO_2/Al_2O_3$=9~10). These synthetic zeolites are suitable as a zeolite material to be used in the present invention. Particularly preferable are the synthetic A-type, X-type, Y-type and synthetic or natural mordenite.

The zeolites are preferred to be in a powdery or particulate form, of which the particle diameter may be appropriately selected according to uses. When they are applied to thick shaped articles, such as various containers, pipes, particulates, large denier fibers or the like, the diameter may be few microns to several tens of microns. Alternatively, when fine denier fibers or thin films are shaped, the particle diameter is preferred to be as small as possible, for example, in the case of fibers for clothing, usually 5 microns or less, preferably 2 microns or less, and more preferably 1 micron or less.

As a flame retardant agent, any known fire retardant agents which have been hitherto used for polyamide shaped articles can be employed. However, particularly preferable ones are antimony trioxide, melamine cyanurate resins, decabromo-diphenylether, brominated polystyrenes and bisphenol-A tetrabromide.

As a reinforcement, any known powdery reinforcing agents which have been hitherto used for polyamide shaped articles can be employed. However, ground products or the like, in particular, of talc, various clays, mica, metallic powder, ceramic powder, porcelain powder, grindings of glass fibers or carbon fibers can be adequately selected to improve heat resistance and stiffness of the shaped articles and, besides, to provide various functions.

The infrared ray radioactive particles are particles which effectively radiate infrared rays, for example, those having an averaged infrared ray radiation dose rate at 50°C in the wave range of 4~25 μm of at least 50%. The infrared ray radiation dose rate is a percent radiation intensity against the radiation intensity of the black body. For the object of the present invention, the average radiation dose rate of the infrared ray radiation particles is preferably at least 60%, most preferably at least 70%. In particular, particles of alumina ($Al_2O_3$), mulite (1~$2Al_2O_3$-$SiO_2$), zirconia ($ZrO_2$), zirconium carbide (ZrC), magnesia (MgO) or the like, having a purity as high as, for example, at least 95%, particularly at least 99%, are most preferred because these have the above average radiation dose rate of at least 75%.

As an antistatic agent, reaction products of an alkylene oxide adduct of glycerine and/or trimethylol propane with an alkylester of a dicarboxylic acid are preferred. Those reaction products having an average molecular weight of 5,000~60,000 wherein the alkylene oxide adduct is a random or block addition polymer of ethylene oxide and propylene oxide and the alkylester of a dicarboxylic acid is an alkylester of an aromatic dicarboxylic acid are more preferable.

As a polyamide to be used in the present invention, mention may be made of general purpose nylons, such as nylon-6, nylon-66, nylon-610, nylon-11, nylon-12, as well as copolyamides or mixtures thereof and the like. However, in any case, those excellent in shaping ability, for example, nylon-6, nylon-66 and nylon-12, are preferred.

The vehicles to be employed in the present invention are polymers constituted by a main component, namely, a structural component occupying at least 60%, preferably at least 80%, having a recurring unit represented by the formula (I) ) shown hereinbefore. The vehicles are polymers having a molecular weight of 1,000~60,000, preferably 10,000~25,000. Preferred examples of the vehicles are condensation polymerization products of succinic acid with diethylene glycol, adipic acid with diethylene glycol and caprolactone with diethylene glycol. In order to provide liquid mixtures wherein the above-described dyes, pigments and various additives are dispersed in a high concentration, the vehicles are desired to be in a liquid state at room temperature and, further, to have a viscosity as low as possible, for example, 20 poises or less at 75°C. In addition, the vehicles having an acid value of 4 or less and a hydroxyl value ranging 30~50 are preferred for their superiority in stability during compounding and shaping.

The liquid mixtures comprise generally 1~50% of the above-described dyes, pigments, etc. and 99~50% of the vehicle, by weight. Further, the liquid mixtures may contain other additives such as heat stabilizers, light stabilizers, catalyzers and the like, and in this case the above range for the additives may be widened to a certain extent.

The liquid mixtures according to the present invention are fed under pressure at a constant rate by using a gear pump, plunger pump or the like into a polyamide in a molten state and compounded therewith. For effecting the constant rate pressurized feeding, the liquid mixtures are required to exhibit fluidity from room temperature to the shaping temperature. A viscosity higher than 30,000 poises at normal temperature is not preferred because it will affect accuracy in measuring. Further, the compounding with polyamides is preferably conducted right before a spinneret or die of each shaping head of shaping apparatuses used for usual melt-spinning or melt-extruding processes. The flow passage to the spinneret or die is preferred to be as short as possible. In addition, for achieving a sufficient kneading after compounding of the polyamide and the liquid mixture, it is desirable to use static mixer elements that do not require any known moving parts. As a static mixer element, there are known "Static Mixer" manufactured by Kenix, U.S.A., "Square Mixer" by Sakura Seisakusho, "Honeycomb Mixer" by Tatsumi Kogyo, "T.K.-ROSS ISG Mixer" by Tokushu Kita Kogyo, etc. In any case, for achieving a sufficient kneading to produce homogeneous dispersion, it is practically preferred to use 15~60 elements. After kneading, shaped articles are produced by a usual melt-shaping process.

In Figs. 1~3, a molten polyamide is introduced from an inlet passage 1 into a shaping apparatus, where the polyamide flows into branched passages 2, 3, if required (as shown in Figs. 2 and 3). The liquid mixture comprising dyes or pigments and/or additives and a vehicle is fed under pressure through injection valve(s) 4 (and 4') from inlet passage (s) 5 (and 5'). Those flows are mixed by means of static mixer elements 6, 8 and (6', 8') and measured by measuring gear pump(s) 7 (and 7'). Although in the embodiments shown in Figs. two static mixer elements 6, 8 are arranged before and after each measuring gear pump, either one of them may be usually enough. The polymer mixture is transferred through approach path(s) 9,(and 9') to a spinneret (or die) pack 11 where further mixed and extruded from a spinneret (or die) 10 (10') by a conventional method to form fibers, films, sheets, etc.

In the embodiment shown in Fig. 2, the polymer flow is branched off into two lines. One line (right hand side in Fig.) is provided with an injection part 4, 5 for the liquid mixture and a spinneret 10' extrudes two polymer flows conjointly or separately. In the embodiment shown in Fig. 3, the polymer is also branched off into two lines and each line is provided with an injection part and a measuring and mixing part, 4~9 or 4'~9'. If the shaping apparatuses shown in Figs. 2 and 3 are employed, diversified multi-component shaped articles, such as sheath-core type composite fibers, side by side composite fibers, two component nonwoven fabric sheets, multi-layered films or the like, can be manufactured.

The invention will be explained in more detail by way of example. In the following examples, part and percent are all by weight unless otherwise specified. Further, in the examples, color fastness to light, retention of strength and antibacterial properties are determined by the following measuring methods.

(Color fastness to light)

A swatch of 7 cm x 7 cm was cut out from a dyed sample. A polyurethane foam 10 mm thick was cut into the same size and attached to the reverse side of the above swatch sample. The sample was then mounted on a fade-o-meter of which inside was kept at 83°C. After exposure to light for 200 hours, the degree of discoloration was determined on the gray scale.

(Retention of tensile strength of yarns)

A yarn sample was mounted on a fade-o-meter of which inside was kept at 83°C. After exposure to light for 200 hours, the retention of tensile strength was determined.

(Antibacterial properties)

The extinction rate of the following bacteria was measured.

Using a suspension of Escherichia coli or Staphylococcus aureus, test bacterial solution was diluted and adjusted to contain 2~4 x $10^5$ bacteria/ml. Two tenth of milliliter of this test bacterial solution was dropped on a shaped article. The bacterial solution as placed on the shaped article was left to act thereupon at 37°C for 18 hours. After 18 hours, the shaped article was washed with physiologic saline. The washing solution was made to 100 ml, in the aggregate. Then, 1 ml of the solution was dispersed in an agar culture medium and kept at 37°C for 24 hours. Survival number of the bacterial was measured and extinction rate was calculated.

## Comparative Example 1

A liquid polyester/ether having a viscosity at 75°C of 400 cp and a molecular weight of about 10,000 that is a polycondensation reaction product of a polyether polyol random copolymer (molecular weight of about 1,000, ethylene oxide: propylene oxide = 1:2) with dimethyl terephthalate was used as a vehicle. Seventy five parts of the vehicle and 25 parts of a perylene pigment, C.I. Pigment Red 123 manufactured by Ciba Geigy, were mixed and kneaded to prepare a liquid colored mixture. Then, using a spinning apparatus as shown in Fig. 1, the mixture was pressurizedly fed from a melt-spinning head into a molten nylon-6 polymer having a polymerization degree of 180, and compounded with the polymer in such an amount that 0.8% of the pigment could be contained in the polymer. Then, spinning was conducted at a spinning rate of 1,200 m/min. to produce undrawn yarn of 224 denier/ 24 filaments in the form of 6 kg yarn package. During spinning, the extrusion pressure of the polymer varied in the range of 1~2 times that of the usual nylon-6 and frequent broken filaments occurred. The undrawn yarn was then drawn 3.2 times and formed into 2 kg yarn packages. During drawing, frequent broken filaments also occurred.

## Example 1

A liquid colored mixture was prepared using 75 parts of a polycondensation reaction product of adipic acid with diethylene glycol, having a molecular weight of about 16,000 and a viscosity at 75°C of 800 cp, in lieu of the vehicle used in Comparative Example 1. Then, a colored polyamide drawn yarn was manufactured in the same manner as

Comparative Example 1.

Example 2

A liquid colored mixture was prepared using a polycondensation reaction product of caprolactone with diethylene glycol, having a viscosity at 75°C of 600 cp, in lieu of the vehicle used in Example 1. Then, a colored polyamide drawn yarn was manufactured in the same manner as Example 1.

Example 3

A liquid colored mixture was prepared using a polycondensation reaction product of succinic acid with diethylene glycol, having a viscosity at 75°C of 900 cp, in lieu of the vehicle used in Example 1. Then, a colored polyamide drawn yarn was manufactured in the same manner as Example 1.

Comparative Example 2

A liquid colored mixture was prepared using a polyethylene glycol nonyl phenylether (Neugen EA-80, manufactured by Dai-ichi Kogyo Seiyaku K.K.) in lieu of the vehicle used in Example 1. Then, a colored polyamide drawn yarn was manufactured in the same manner as Example 1.

With regard to the above Examples 1~3 and Comparative Examples 1 and 2, yarn breakage rates at the spinning and drawing steps and tensile strength and elongation at break of drawn yarn are shown in Table 1.

Table 1

| Example No. | Comparative Example 1 | Example 1 | Example 2 | Example 3 | Comparative Example 1 |
|---|---|---|---|---|---|
| Yarn breakage rate in spinning (%) | 24 | 5 | 6 | 6 | 19 |
| Yarn breakage rate in drawing (%) | 18 | 4 | 5 | 4 | 11 |
| Tensile strength of drawn yarn (g/d) | 3.7 | 4.7 | 4.8 | 4.8 | 3.8 |
| Elongation at break of drawn yarn (%) | 28 | 34 | 33 | 35 | 30 |

Examples 4~6 and Comparative Example 3

Ninety eight parts each of the vehicles used in Examples 1~3 and Comparative Example 1 and 2 parts of a fluorescent whitener, 4,4'-bis(2-benzoxazolyl) stilbene (Optical Brightener, manufactured by Eastman), were mixed and kneaded with a three-roll mill to provide a liquid mixture having a viscosity of about 100 poises and specific gravity of about 1.2. Then, the liquid mixture was pressurizedly fed from a melt-spinning head into a molten nylon-66 polymer with a polymerization degree of 170, containing 0.43% of $TiO_2$, a white inorganic compound manufactured by Fuji Titanium, and compounded with the polymer in such an amount that 0.02% of the fluorescent brightener could be contained in the polymer. Then, the polymer was spun into an undrawn yarn of 224 deniers/24 filaments which was further drawn 3.3 times to obtain a white drawn yarn of 70 deniers/ 24 filaments.

Example 7

A nylon-6 white drawn yarn containing 1.73% of $TiO_2$ and 0.02% of a fluorescent brightener, based on the nylon-6, was manufactured in the same manner as Example 4 above, except that a liquid mixture consisting of 40% $TiO_2$, 0.52% fluorescent brightener and 59.38% vehicle used in Example 1 was used.

Comparative Examples 4~6

By the so-called "dry coloring method", a fluorescent brightener was admixed with nylon-66 (containing 0.43% of $TiO_2$) in such an amount that 0.02% of the fluorescent brightener could be contained in nylon and a yarn was obtained by a usual melt-spinning process (Comparative Example 4).

Alternatively, a color concentrate pellets prepared by admixing and kneading 2% of the fluorescent brightener therewith were diluted by the factor of 100 and a yarn was obtained by the usual melt-spinning process (Comparative Example 5).

Alternatively, a yarn was produced in the same manner as the Comparative Example 4, except that the fluorescent brightener was not added (Comparative Example 6).

With regard to the above Examples 4~7 and Comparative Examples 3~6, yarn breakage rates at spinning and drawing steps, whiteness, tensile strength and elongation at break of the drawn yarns were determined and a light-fastness test (JIS L-0842, for 20 hours) was conducted. The result is shown in Table 2.

Table 2

| Example No. | Example 4 | Example 5 | Example 6 | Example 7 | Comparative Example 3 | Comparative Example 4 | Comparative Example 5 | Comparative Example 6 |
|---|---|---|---|---|---|---|---|---|
| Fluorescent whitener (%) | 0.02 | 0.02 | 0.02 | 0.02 | 0.02 | 0.02 | 0.02 | 0 |
| Yarn breakage rate in spinning (%) | 5 | 5 | 5 | 5 | 9 | 6 | 6 | 5 |
| Yarn breakage rate in drawing (%) | 4 | 4 | 4 | 4 | 6 | 5 | 6 | 4 |
| Tensile strength (g/d) | 5.6 | 5.5 | 5.6 | 5.6 | 5.4 | 5.4 | 5.4 | 5.7 |
| Elongation at break (%) | 38 | 37 | 37 | 37 | 35 | 34 | 35 | 38 |
| Whiteness (L value) | 92 | 92 | 92 | 94 | 91 | 90 | 90 | 88 |
| Color-fastness test | ○ | ○ | ○ | ○ | ○ | ○ | △~○ | × |
| Discoloration | No | No | No | No | No | Yes | Yes | No |

As is clear from Table 2, the white mass-colored polyamide fibers according to the present invention retain excellent

fluorescent whiteness of the fluorescent brightener, color-fastness to light, heat resistance and solvent resistance as well as a good weathrability such that any conventional post-dyeing processes have never been able to provide. The yarns according to the invention are substantially on the same level as usual yarns from the qualitative point of view.

Example 8~11 and Comparative Example 7

Fifty parts of the vehicle used in Example 1 above and 50 parts of phthalic anhydride were mixed and kneaded with a three-roll mill to provide a liquid mixture having a specific gravity of 1.27.

Then, the liquid mixture was pressurizedly fed from a melt-spinning head into a molten nylon-6 polymer having a relative viscosity ($\eta_r$) of 2.79 and $NH_3$ groups of 42 g equivalent weight/$10^6$ g polymer, and compounded with the polymer in such an amount that the phthalic anhydride could be contained in the amounts shown in Table 3. Then, the polymer was forwarded to a spinneret taking 7 minutes and spun at a spinning temperature of 260°C and a spinning rate of 1,000 m/min. into a 224 denier/24 filament undrawn yarn which was wound on a takeup roll. The wound undrawn yarn was further drawn 3.2 times to obtain a 70 denier/24 filament drawn yarn.

Relative viscosities ($\eta_r$), contents of amino group, finenesses, tensile strengths, elongations at break and gas yellowing test results are shown in Table 3. For comparison of gas yellowing test, there is also shown the test result for a nylon-6 drawn yarn having an $\eta_r$ of 2.78 and an $NH_3$ group content of 42 g equivalent weight/$10^6$ g polymer (Comparative Example 7).

As is seen from Table 3, in accordance with the present invention, hard-dyeable polyamide fibers and hard-yellowing polyamide fibers having a desired amino group content can be obtained and, in addition, polyamide fibers not differing in quality from usual polyamide fibers and excellent in uniformity of quality can be manufactured.

Table 3

| Example No. | Comparative Example 7 | Example 8 | Example 9 | Example 10 | Example 11 |
|---|---|---|---|---|---|
| Phthalic anhydride content (%) | - | 0.18 | 0.33 | 0.40 | 0.50 |
| Rel. viscosity ($\eta_r$) | 2.78 | 2.77 | 2.75 | 2.73 | 2.50 |
| Amino group (g eq/$10^6$ g polymer) | 42 | 30 | 20 | 13 | 11 |
| Tensile strength (g/d) | 5.1 | 5.0 | 4.9 | 5.0 | 4.5 |
| Elongation at break (%) | 42 | 40 | 39 | 39 | 37 |
| Hard-dyeability | × | ○ | ○ | ◎ | ◎ |
| Gas yellowing test | ×~△ | △ | ○ | ○ | ○ |

Note: The relative viscosity ($\eta_r$) was measured at 25°C of solution of 0.5 g polymer in 50 ml of 97.8% sulfuric acid.

Examples 12~15 and Comparative Example 8

Fifty eight parts of the vehicle used in Example 1 above and 42 parts of the zeolite shown in Table 4 which had been dried at 200°C for 7 hours under vacuum were mixed and kneaded to provide a liquid mixture. Then, the liquid mixture was admixed with a nylon-6 polymer in the same manner as Example 1 in such an amount that 2% of the zeolite could be contained in the polymer. Then, the polymer was melt-spun and drawn to form a 70 denier/24 filament drawn yarn. The thus obtained yarns contained Na as shown in Table 4.

Then, nylon tricot napped fabrics were produced from those yarns by a conventional process and dyed with a metal complex dye (central metals: Co, Cr) in a dye bath and under conditions as described below. The result of measurement of color-fastness to light is shown in Table 4.

Dye bath No. 1

| | |
|---|---|
| Lanacin Yellow 2RL (trade name of a metallized dye having a central Co atom, manufactured by Sandoz) | 0.103% owf. |
| Lanacin Bordeaux RL (trade name of a metallized dye having a central Co atom, manufactured by Sandoz) | 0.0165% owf. |
| Lanacin Black BRL (trade name of a metallized dye having a central Co atom, manufactured by Sandoz) | 0.06% owf. |
| Ammonium sulfate | 0.5 g/l |
| Neogen S-20 (trade name, manufactured by Dai-ichi Kogyo Seiyaku) | 2.0% owf. |
| Cellopol DR-80 (trade name, manufactured by Sanyo Kasei) | 0.6% owf. |

Bath ratio : 30 times.
Bath temperature: dyeing was conducted while the temperature was raised from 30°C to 90°C for 60 minutes, and further continued at 90°C for 45 minutes.

Table 4

| Example No. | Example 12 | Example 13 | Example 14 | Example 15 | Comparative Example 8 |
|---|---|---|---|---|---|
| Zeolite | $Z_1$ | $Z_2$ | $Z_3$ | $Z_4$ | - |
| Type | A | X | Y | natural mordenite | - |
| Average particle dia. (μ) | 1.1 | 1.6 | 0.6 | 2.0 | - |
| Theoretical Na content (wt.%) | 15.7 | 14.4 | 11.2 | 6.0 | - |
| Specific surface area ($m^2$/g) | 664 | 838 | 908 | 341 | - |
| Content in fiber | 2.0 | 2.0 | 2.0 | 2.0 | - |
| Na content in drawn yarn (wt.%) | 0.31 | 0.28 | 0.22 | 0.12 | - |
| Color-fastness to light | 4 | 4 | 4 | 4 | 1~2 |

From Table 4, it has been found that the dyed articles composed of the polyamide fibers incorporated with zeolite according to the present invention and dyed with the metal complex dyes have an excellent color-fastness to light.

Example 16 and Comparative Example 9

Two hundred fifty grams of zeolite $Z_3$ used in Example 14 were admixed with 1 liter of 1/20M silver nitrate aqueous solution. Thus obtained mixture was retained at room temperature under stirring for 3 hours to effect ion-exchange. The silver-zeolite obtained by such an ion-exchanging process was filtrated and washed with water to remove excessive silver ions. The obtained silver-zeolite was treated by copper sulfate aqueous solution in the same manner as the above to obtain silver/copper-zeolite (zeolite $Z_5$). The obtained zeolite $Z_5$ had copper and silver contents of 2.75% and 1.04%, respectively, and a specific surface area of 875 $m^2$/g. Using the obtained silver/copper-zeolite $Z_5$, a drawn yarn was manufactured in the same manner as Example 12. Metal contents in the drawn yarns were measured by an atomic-absorption spectrophotomer and X-ray fluorometry. The result is shown in Table 5.

Table 5

| Metal content in drawn yarn | | | | | | | |
|---|---|---|---|---|---|---|---|
| Zeolite | Content in fiber (wt.%) | Na | Cu | Ag | Si | Co | Remarks |
| Ag/Cu-zeolite | 2.0 | 0.053<br>0.022 | 0.048<br>0.044 | 0.018<br>0.017 | 0.22<br>0.19 | -<br>0.005 | before dyeing<br>after dyeing |

Then, a tricot napped fabric was manufactured in the same manner as Example 12 and dyed with the below-described metal complex dye (Dye bath No. 2). Metal contents in the resultant polyamide dyed fabric are shown in Table 5 above. Further, this polyamide fabric was measured for color fastness to light, retention of tensile strength and antibacterial properties. The result is shown in Table 6.

For comparison, a sample which did not contain the silver/copper-zeolite $Z_5$ was also dyed in the same manner as the above and the same measurement was conducted.

Dye bath No. 2

| | | |
|---|---|---|
| Dyestuff : | Lanacin Bordeaux RL | 0.15% owf. |
| Dyeing aid: | ammonium sulfate | 0.5 g/l |
| | Neogen S-20 | 2.0% owf. |
| | Cellopol DR-80 | 0.6% owf. |

Note: The bath temeprature and bath ratio were same as those in Example 12.

Table 6

| | Zeolite | Dye bath | Color fastness to light | Retention of tensile strength | Anti-bacterial property(%) |
|---|---|---|---|---|---|
| Example 16 | Ag/Cu-zeolite | Dye bath No. 2 | 4 | 73.5 | 100 |
| Comparative Example 9 | - | " | 1~2 | 15.0 | 0 |

From the result shown in Table 5, it has been found that when polyamide fibers containing the copper/silver-zeolite are dyed with a metal complex dye, copper, silver and silica contents are substantially constant, whereas only sodium is reduced from 0.053% to 0.022%. This proves the fact that when the polyamide fibers containing silver/copper-zeolites are dyed with a metal complex dye, the silver and copper are not ion-exchanged but only the sodium is ion-exchanged, so that the zeolite holds the metal complex dye.

Alternatively, from the result shown in Table 6, it has been found that dyed articles produced by dyeing polyamide fibers containing silver/copper-zeolite with a metal complex dye exhibit a good resistance to light as well as super-antifungal properties such as a fungi extinction rate of 100%.

Example 17

Sixty parts of the vehicle used in Example 1 and 2 parts of carbon black were admixed with 40 parts of alumina particles having a degree of crystallization of 99%, an average particle diameter of 0.5 µm and an average radioactive rate at 50°C in the wave range of 4~25 µm, and a liquid mixture was obtained.

Then, compounding of the liquid mixture with a nylon-6 molten polymer, spinning and fabricating of fabrics were conducted by using a spun-bond manufacturing apparatus.

The spun-bond manufacturing apparatus was equipped with a spinneret provided with 240 in the aggregate of

orifices with a diameter of 0.40 mm. The orifices were aligned in two rows and in each row adjacent orifices were 3 mm apart. The spinneret was further provided with rows of hot gas jet nozzles, aggregating 250, arranged alongside of the rows of orifices. A screen for collecting fibrous fleece which advanced with a traverse motion was provided 20 cm below the spinneret face.

The vehicle, i.e., liquid mixture, was pressurizedly fed into the nylon-6 molten polymer in such an amount that 0.5% of carbon black and 10% of alumina particles could be contained in the polymer. Then, a nonwoven fabric sheet having a width of 140 cm, a unit weight of 50 g/$m^2$ and a fineness of single filament of about 1 denier was manufactured.

A sheet 15 cm long cut out from the above nonwoven fabric sheet was attached closely on the skin on an arm and rolled twice around the arm. Then, temperature in the middle portion of the rolled sheet was measured with a thermocouple. The temperature 10 minutes after the commencement of the experiment measured 22°C in the laboratory when the outdoor temperature was 10°c. Using a nonwoven fabric sheet manufactured in the same manner as the above, except that the liquid mixture was not compounded, the temperature measurement was conducted in the same way and the temperature measured 16°C. The above experiments proved that the nonwoven fabric sheet according to the present invention is excellent in heat insulation as compared with the conventional sheet.

As demonstrated by the foregoing Examples, the polyamide shaped articles of the present invention are provided with an excellent coloring ability or functionability as well as physical properties on the same level as usual polyamide shaped articles.

Further, in accordance with the process of the present invention, color changing and material changing can be performed relatively easily, so that the process has been much simplified as compared with conventional processes. In addition, the present invention has a feature that polyamide shaped articles excellent in uniformity of quality can be manufactured with good operatabilities of shaping and finishing.

## Claims

1. A polyamide shaped article comprising a polyamide containing at least one substance selected from dyes, pigments and modifying additives, and a vehicle comprising a polymer having a molecular weight of 1,000-60,000, selected from a polyester constituted by a structural component occupying at least 60 % having a recurring unit represented by formula (I):

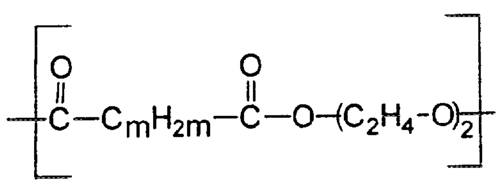

(I)

wherein m is an integer from 2 to 12, and a polymerization product of caprolactone with diethylene glycol.

2. An article as claimed in claim 1, wherein said modifying additives are selected from organic carboxylic acids, zeolite particles, flame retardants, reinforcement agents, antistatic agents, infrared ray radioactive particles, electroconducting particles, heat stabilizers, light stabilizers, and catalyzers.

3. An article as claimed in claim 1 in the form of fibres, filaments, films, sheets, yarns or fabrics.

4. A process for manufacturing a polyamide shaped article as claimed in any one of claims 1 to 3, which comprises compounding a polyamide in a molten state with a liquid mixture comprising at least one substance selected from dyes, pigments and modifying additives, and a vehicle comprising a polymer having a molecular weight of 1,000-60,000 selected from a polyester constituted by a structural component occupying at least 60 % having a recurring unit represented by formula (I):

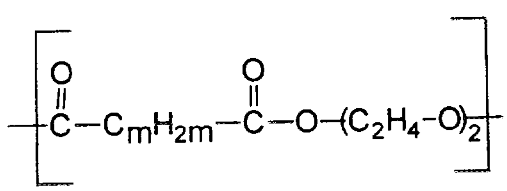

(I)

wherein m is an integer from 2 to 12, and a polymerization product of a caprolactone with diethylene glycol, and then melt-shaping the resulting compound.

5. A process as claimed in claim 4, wherein said shaped article is a fibrous structure.

**Patentansprüche**

1. Polyamid-Formteil umfassend ein Polyamid, das mindestens eine Substanz, ausgewählt aus Färbemitteln, Pigmenten und modifizierenden Zusatzstoffen, und ein Vehikel, das ein Polymer mit einem Molekulargewicht von 1000 bis 6000 enthält, welches aus einem Polyester, der zu mindestens 60 % aus einer strukturellen Komponente, die eine Repetiereinheit der Formel (I) hat:

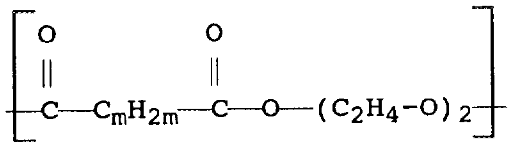

(I)

in der m eine ganze Zahl von 2 bis 12 ist; besteht, und einem Polymerisationsprodukt von Caprolacton mit Diethylenglycol ausgewählt ist, enthält.

2. Formteil nach Anspruch 1, in dem die modifizierenden Zusatzstoffe aus organischen Carbonsäuren, Zeolithpartikeln, flammhemmenden Zusatzmitteln, Verstärkungsagenzien, antistatischen Agenzien, Infrarotstrahlen-radioaktiven Partikeln, elektrischleitenden Partikeln, Wärmestabilisiermitteln, Licht-Stabilisatoren und Katalysatoren ausgewählt sind.

3. Formteil nach Anspruch 1, das in Form von Fasern, Fäden, Filmen, Folien, Garnen oder Geweben vorliegt.

4. Verfahren zur Herstellung eines Polyamid-Formteils nach einem der Ansprüche 1 bis 3 umfassend:

- Compoundieren eines Polyamids in geschmolzenem Zustand mit einer flüssigen Mischung, die mindestens eine Substanz, ausgewählt aus Färbemitteln, Pigmenten und modifizierenden Zusatzstoffen, und ein Vehikel, das ein Polymer mit einem Molekulargewicht von 1000 bis 6000 enthält, welches aus einem Polyester, der zu mindestens 60 % aus einer strukturellen Komponente, die eine Repetiereinheit der Formel (I) hat:

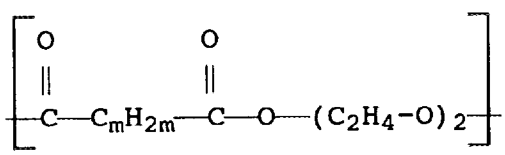

(I)

  in der m eine ganze Zahl von 2 bis 12 ist; besteht, und einem Polymerisationsprodukt von Caprolacton mit Diethylenglycol ausgewählt ist, enthält;

- und dann Schmelzformen des resultierenden Compounds.

5. Verfahren nach Anspruch 4, in dem das Formteil eine Faserstruktur ist.

**Revendications**

1. Objet façonné en polyamide, comportant un polyamide contenant au moins une substance choisie parmi des teintures, des pigments et des additifs de modification, et un véhicule comportant un polymère présentant un poids moléculaire de 1000-60000, choisi entre un polyester constitué par un composant structurel occupant au moins 60%, et présentant une unité récurrente représentée par la formule (I):

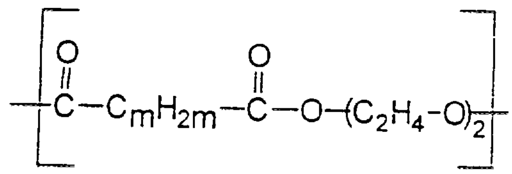

(I)

dans laquelle m est un entier valant de 2 à 12, et un produit de polymérisation du caprolactone avec du diéthylènegylcol.

2. Objet selon la revendication 1, dans lequel lesdits additifs de modification sont choisis parmi des acides carboxyliques organiques, des particules de zéolite, des ignifuges, des agents de renforcement, des agents antistatiques, des particules émettant un rayonnement infrarouge, des particules conductrices de l'électricité, des stabilisants vis-à-vis de la chaleur, des stabilisants vis-à-vis de la lumière et des catalyseurs.

3. Objet selon la revendication 1, sous forme de fibres, de filaments, de pellicules, de feuilles, de fils ou de tissus.

4. Procédé de fabrication d'un objet façonné en polyamide mis en forme selon l'une quelconque des revendications 1 à 3, qui comporte l'étape consistant à mélanger un polyamide à l'état fondu avec un mélange liquide comprenant au moins une substance choisie parmi des teintures, des pigments et des additifs de modification, et un véhicule comportant un polymère présentant un poids moléculaire de 1000-60000, choisi entre un polyester constitué par un composant structurel occupant au moins 60% et présentant une unité récurrente représentée par la formule (I):

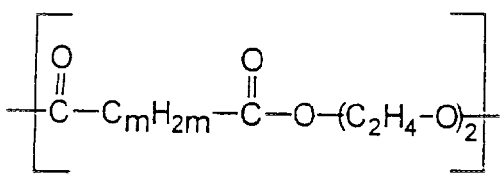

(I)

dans laquelle m est un entier valant de 2 à 12, et un produit de polymérisation d'un caprolactone avec le diéthylèneglycol, et à façonner ensuite le composé résultant à l'état fondu.

5. Procédé selon la revendication 4, dans lequel ledit objet façonné est une structure fibreuse.

FIG_1

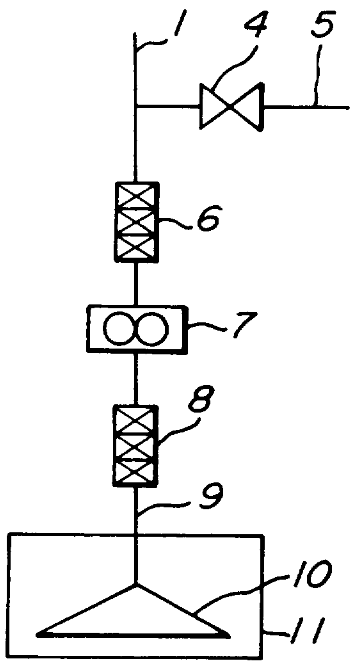


FIG_2

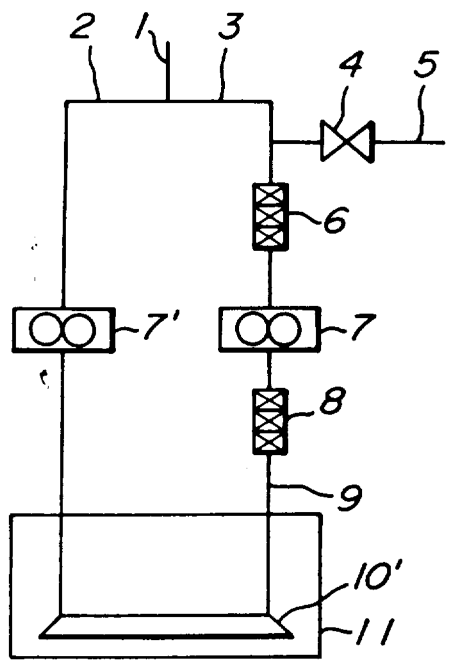


FIG_3